# FASCICULE DE BREVET EUROPEEN

(11) **EP 0 749 876 B1**
(45) Date de publication et mention de la délivrance du brevet: **20.12.2000**
(21) Numéro de dépôt: 96401163.9
(22) Date de dépôt: 30.05.1996
(51) Int. Cl.: B60T 7/12

(54) **Système de freinage de véhicule automobile**
Kraftfahrzeug-Bremsanlage
Motor vehicle brake system

(30) Priorité: 20.06.1995 FR 9507363
(43) Date de publication de la demande: 27.12.1996
(73) Titulaire: AUTOMOBILES PEUGEOT, 75116 Paris (FR); AUTOMOBILES CITROEN, 92200 Neuilly-sur-Seine (FR)
(72) Inventeur: Damey, Walter, 93140 Bondy (FR); Nogues, Laurent, 78955 Carrieres-sous-Poissy (FR)
(74) Mandataire: Habasque, Etienne Joel Jean-François

(56) Documents cités:
- DE-A- 4 201 668
- DE-A- 4 203 541

## Description

La présente invention concerne un système de freinage de véhicule automobile.

Plus particulièrement, la présente invention concerne un système de freinage de véhicule automobile, qui comporte au moins un circuit de freinage hydraulique dont la pression de freinage est commandée par l'utilisateur par l'intermédiaire d'une pédale de frein.

Par ailleurs, les véhicules automobiles sont également munis de moyens de freinage dits de parcage ou de stationnement. Ces moyens de freinage sont commandés par l'utilisateur soit au pied par l'intermédiaire d'une pédale, soit à la main par l'intermédiaire d'un levier.

La manoeuvre de ce levier par l'utilisateur permet de doser le freinage obtenu par exemple lorsque celui-ci souhaite contrôler une manoeuvre du véhicule.

Ceci n'est pas possible avec des moyens de freinage de stationnement commandés par une pédale, car ceux-ci fonctionnent en tout ou rien.

On conçoit alors que ceci présente un certain nombre d'inconvénients car il peut être intéressant pour l'utilisateur de contrôler certaines manoeuvres du véhicule grâce à une pédale plutôt que grâce à un levier.

On connaît du document DE-A 4 201 668, un système conforme au préambule de la revendication 1, mais qui présente des problèmes de suivi des actions successives de l'utilisateur sur la pédale.

Le but de l'invention est donc de résoudre ces problèmes.

A cet effet, l'invention a pour objet un système de freinage de véhicule automobile, du type comportant au moins un circuit de freinage hydraulique dont la pression de freinage est commandée par l'utilisateur par l'intermédiaire d'une pédale de frein, des moyens de maintien automatique du véhicule en rampe, par maintien de la pression de freinage dans le circuit de freinage, activés lors de la détection d'une vitesse nulle du véhicule et d'une action de l'utilisateur sur la pédale de frein, et associés à des moyens de détection d'une nouvelle action par l'utilisateur sur la pédale de frein lorsque les moyens de maintien sont actifs et à des moyens de pilotage de ceux-ci pour établir la pression de freinage dans le circuit de freinage à la valeur correspondante à cette nouvelle action de l'utilisateur sur la pédale, les moyens de maintien comprenant une électrovanne implantée dans le circuit de freinage du véhicule et pilotée à la fermeture et à l'ouverture pour maintenir ou non la pression de freinage dans ce circuit, sous la commande d'une unité de traitement d'informations raccordée à des moyens de détection de la vitesse de déplacement du véhicule et à des moyens de détection d'une action sur la pédale de frein par l'utilisateur, caractérisé en ce que lors de la détection d'une nouvelle action sur la pédale de frein par l'utilisateur, les moyens de maintien étant actifs, l'unité de traitement d'informations est adaptée pour piloter l'électrovanne à l'ouverture pendant un temps déterminé, puis pour piloter celle-ci à la fermeture afin d'établir la pression de freinage correspondant à la nouvelle action, dans le circuit de freinage.

L'invention sera mieux comprise à la lecture de la description qui va suivre, donnée uniquement à titre d'exemple et faite en se référant aux dessins annexés, sur lesquels :
- la Fig.1 représente un schéma synoptique d'un premier exemple de réalisation d'un système de freinage selon l'invention;
- la Fig.2 représente un schéma synoptique d'un second exemple de réalisation d'un système de freinage selon l'invention; et
- la Fig.3 représente un organigramme illustrant le fonctionnement d'un tel système de freinage.

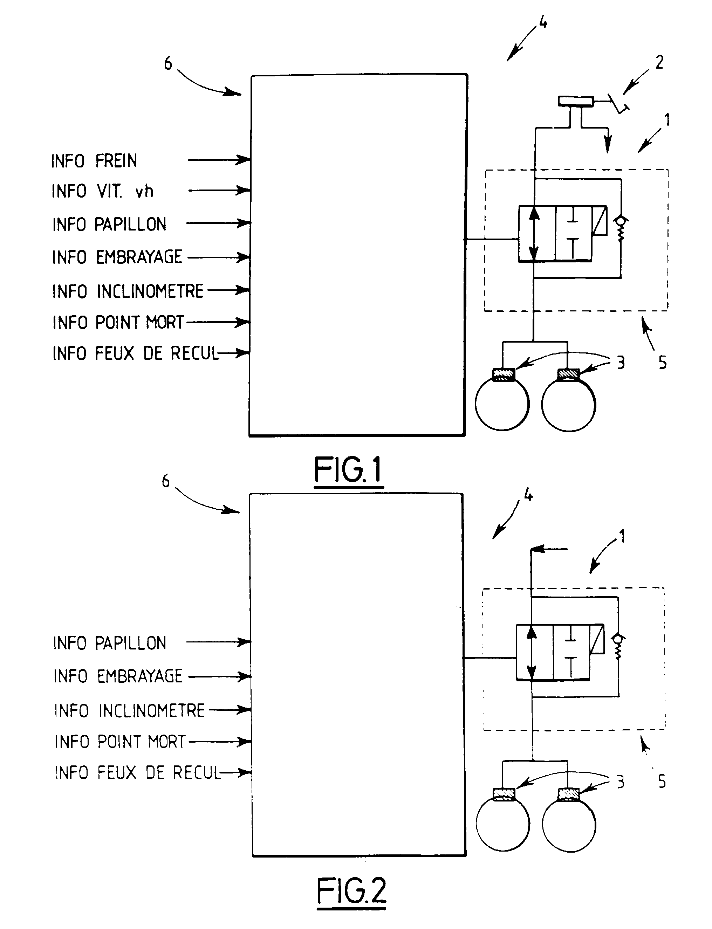

On a représenté sur les figures 1 et 2, des exemples de réalisation d'un système de freinage de véhicule automobile dans lesquels des numéros de référence identiques désignent des éléments identiques ou analogues.

Le système de freinage représenté sur ces figures comporte au moins un circuit de freinage hydraulique désigné par la référence générale 1, dont la pression de freinage est commandée par l'intermédiaire d'une pédale de frein désignée par la référence générale 2 sur la figure 1, actionnable par un utilisateur, pour contrôler le fonctionnement d'étriers de freins désignés par la référence générale 3 sur ces figures et associés à deux roues disposées en diagonale du véhicule, dans le cas où le circuit de freinage du véhicule comporte un circuit de freinage du type en X.

On conçoit alors qu'une action par l'utilisateur sur la pédale de frein provoque l'établissement d'une pression de freinage dans le circuit de freinage, pour assurer le freinage du véhicule.

Par ailleurs, ce système de freinage comporte également des moyens de maintien automatique du véhicule en rampe désignés par la référence générale 4 sur ces figures, ces moyens de maintien automatique du véhicule en rampe étant adaptés pour maintenir la pression de freinage dans le circuit de freinage du véhicule et étant activés lors de la détection d'une vitesse nulle du véhicule et d'une action de l'utilisateur sur la pédale de frein.

On conçoit en effet que ces moyens de maintien peuvent par exemple comporter une électrovanne désignée par la référence générale 5, munie de moyens de dérivation, implantée dans ce circuit et dont le fonctionnement à l'ouverture et à la fermeture peut être commandé par une unité de traitement d'informations 6 recevant en entrée comme cela sera décrit plus en détail par la suite, différentes informations.

En fonctionnement normal du véhicule, l'électrovanne 5 est ouverte et la pression dans le circuit de freinage est commandée par l'utilisateur par l'intermédiaire de la pédale de frein.

Par contre, lorsque l'unité de traitement d'informations 6 détecte une vitesse nulle du véhicule et un actionnement de la pédale de frein par l'utilisateur, cette unité pilote à la fermeture l'électrovanne 5 pour maintenir la pression de freinage dans le circuit de freinage et donc obtenir un maintien automatique du véhicule en position.

On conçoit que ceci est particulièrement intéressant par exemple lorsque le véhicule est en rampe.

Les différentes informations reçues en entrée par l'unité de traitement d'informations 6, peuvent par exemple comporter une information de vitesse du véhicule délivrée par exemple par un capteur de type inductif ou calculée par un calculateur d'anti-blocage de roues associé à cette fonction dans certains véhicules.

Cette unité peut également recevoir une information en provenance d'un contact de feux de stop du véhicule, situé par exemple au niveau de la pédale de frein principal de ce véhicule.

Cette unité peut également recevoir une information de position du levier de commande de la boîte de vitesses à partir d'un capteur additionnel par exemple de type optique, détectant que la position point mort du levier de vitesses.

Cette information est intéressante pour déterminer le sens de déplacement du véhicule.

En effet, cette unité peut également recevoir une information relative à l'état de feux de recul du véhicule, cette information étant par exemple issue d'un capteur d'allumage des feux déjà existant sur le véhicule et permettant de déterminer le sens de déplacement du véhicule.

Cette unité peut également recevoir une information de position de l'accélérateur du véhicule, cette information provenant par exemple d'un potentiomètre de papillon des gaz déjà existant sur le véhicule ou d'une piste correspondante d'un potentiomètre double piste associé à ce papillon ou du calculateur de pilotage du fonctionnement du moteur ou d'un commutateur placé sur la pédale d'accélérateur du véhicule.

Cette unité peut également recevoir une information relative à la position de l'embrayage du véhicule à partir d'un capteur additionnel de type potentiométrique ou commutateur implanté par exemple sur la pédale d'embrayage du véhicule ou sur la boîte de vitesses de celui-ci.

L'unité peut également recevoir une information relative à l'inclinaison de la route sur laquelle se trouve le véhicule.

Cette information est issue par exemple d'un capteur additionnel constitué d'un potentiomètre délivrant par exemple une tension variant de 0 à 5 volts selon la pente.

C'est ainsi que si la tension délivrée par ce potentiomètre est comprise entre 2,9 et 5 volts, une montée est détectée, si la tension délivrée par ce potentiomètre est comprise entre 2,1 et 2,9 volts, un plat est détecté, tandis que si la tension délivrée est comprise entre 0 et 2,1 volts, alors une descente est détectée.

Cette information est importante pour définir le mode de désactivation des moyens de maintien.

Dans l'exemple illustré sur la figure 1, l'unité 6 des moyens de maintien comprend un calculateur spécifique recevant les différentes informations décrites précédemment.

Il va de soi bien entendu que cette unité 6 peut également par exemple être formée par le calculateur d'anti-blocage des roues déjà implanté sur le véhicule comme cela est représenté sur la figure 2.

Dans ce cas, ce calculateur reçoit déjà plusieurs des informations évoquées précédemment et il suffit alors de raccorder en entrée de celui-ci, différents capteurs permettant de délivrer les différentes informations évoquées précédemment et non reçues par celui-ci dans le cadre de sa fonction d'anti-blocage des roues.

Ces différentes informations permettent au calculateur de détecter une nouvelle action de l'utilisateur sur la pédale de frein, lorsque les moyens de maintien sont actifs c'est-à-dire lorsque l'électrovanne 5 de ceux-ci est fermée et de piloter ceux-ci pour établir la pression de freinage dans le circuit de freinage à la valeur correspondant à la nouvelle action de l'utilisateur sur la pédale de frein.

Ceci permet ainsi de prendre en compte une nouvelle action de l'utilisateur sur cette pédale pour régler la pression de freinage dans le circuit à la valeur correspondant à cette nouvelle action.

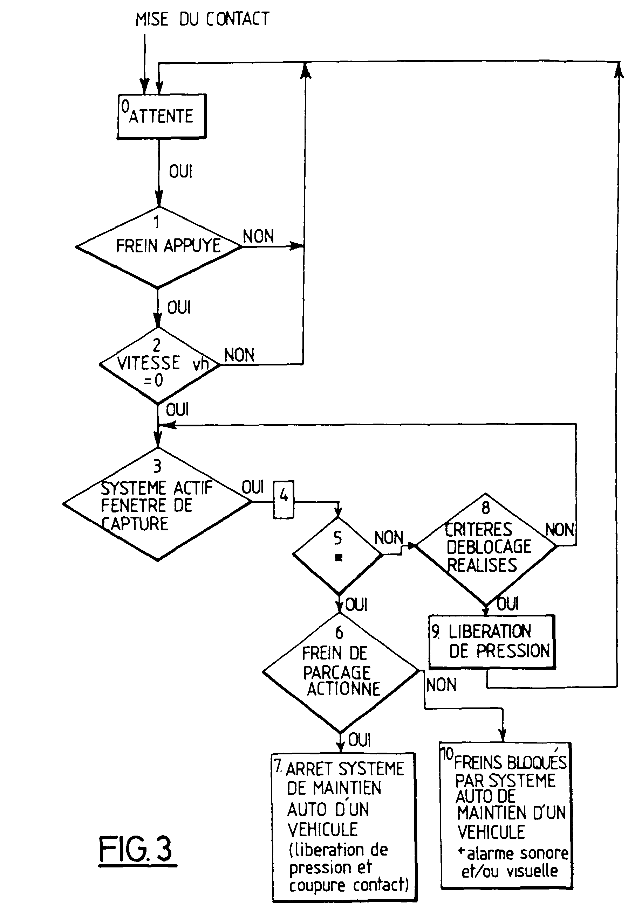

Un exemple de fonctionnement d'un tel système de freinage est décrit sur la figure 3.

Le véhicule étant en phase de roulage, étape O, les moyens de maintien automatique en rampe du véhicule sont inactifs, c'est-à-dire que l'électrovanne 5 est ouverte et que les moyens de freinage du véhicule fonctionnent de manière classique sous le contrôle de l'utilisateur par l'intermédiaire de la pédale de frein.

Afin de mettre en action ces moyens de maintien et donc de les rendre actifs, il est nécessaire que deux conditions soient remplies, à savoir qu'une action sur la pédale de frein principal par le conducteur soit détectée, étape 1, mais également que la vitesse du véhicule soit nulle comme cela est détecté à l'étape 2.

Dans le cas où ces deux conditions ne sont pas remplies, les moyens de maintien restent inactifs.

Cependant, une fois que ces deux conditions sont vérifiées, les moyens de maintien passent à l'état actif c'est-à-dire que l'électrovanne 5 se ferme sous le contrôle de l'unité 6 et que la pression imprimée par le conducteur dans le circuit de freinage par l'intermédiaire de la pédale de frein, est en quelque sorte emprisonnée dans la branche correspondante du circuit de freinage, étape 3, en garantissant ainsi le maintien du véhicule en position même après que l'utilisateur ait relâché la pédale de frein.

Dans le cas où l'utilisateur actionne à nouveau la pédale de frein, alors que ces moyens de maintien sont actifs, il déclenche un emprisonnement d'une nouvelle pression de freinage dans le circuit de freinage qui est régi de la façon suivante.

Dès la détection d'une nouvelle action sur la pédale de frein, l'unité de traitement d'informations 6 déclenche une fenêtre de capture de l'ordre par exemple de 500 millisecondes, pendant laquelle cette unité commande à l'ouverture l'électrovanne 5.

Au terme de cette période de temps déterminée, l'unité de traitement pilote à la fermeture l'électrovanne 5, de manière à emprisonner la nouvelle pression de freinage appliquée sur la pédale de frein par le conducteur lors de cette nouvelle action, dans le circuit de freinage, avant que celui-ci n'ait eu le temps d'ôter son pied de la pédale.

On conçoit alors que cette caractéristique prend toute son envergure, dans le cas par exemple d'une côte, marche avant enclenchée, embrayage débrayé et un conducteur désirant faire une manoeuvre de créneau, sans utiliser la marche arrière.

Le conducteur du véhicule peut alors contrôler la manoeuvre de celui-ci uniquement par la pédale de frein, étape 4.

Ensuite, dans le cas d'un redémarrage c'est-à-dire contact non coupé, étape 5, l'unité de traitement d'informations vérifie si les conditions de désactivation des moyens de maintien sont remplies à l'étape 8, et provoque alors la libération de la pression de freinage dans la branche correspondante du circuit de freinage à l'étape 9, par un pilotage de l'électrovanne à l'ouverture.

Les critères de désactivation des moyens de maintien peuvent être les suivants :
1) sur le plat, quel que soit le sens de déplacements du véhicule, on désactive les moyens de maintien sur un paramètre tel que le taux d'embrayage, ce qui offre un agrément de conduite supplémentaire en supprimant les à-coups désagréables au redémarrage du véhicule.
2) dans le cas d'une pente montante, il est nécessaire de détecter le sens de déplacement du véhicule, d'où deux considérations possibles :
   a) si le véhicule va dans le sens avant, on désactive les moyens de maintien sur une combinaison du taux d'embrayage et du taux d'accélération, ces taux étant déterminés au préalable ou pouvant être définis en fonction de la valeur de la pente.
   b) si le véhicule va dans le sens arrière, on désactive les moyens de maintien sur un taux d'embrayage défini au préalable.
3) dans le cas d'une pente descendante, il est nécessaire comme en montée de détecter le sens de déplacement du véhicule d'où également deux considérations possibles :
   a) si le véhicule va dans le sens avant, on désactive les moyens de maintien sur un taux d'embrayage défini au préalable, et
   b) si le véhicule va dans le sens arrière, on désactive les moyens de maintien sur une combinaison du taux d'embrayage et du taux d'accélération, ces taux étant déterminés au préalable ou pouvant être définis en fonction de la valeur de la pente.

Il est également possible d'intégrer dans ce système une fonction de sécurité, étape 6, permettant par exemple si le véhicule est immobilisé et que le contact de mise en route de celui-ci est coupé ou que la portière du conducteur est ouverte, ou que le conducteur est absent de son siège, ou que la portière du passager avant est ouverte et le conducteur est absent de son siège, d'indiquer au conducteur la nécessité d'actionner les moyens de freinage de parcage avant de quitter le véhicule. Tant que cela n'a pas été fait, une alarme sonore et/ou visuelle par exemple, étape 10, peut prévenir le conducteur du véhicule que les moyens automatiques de maintien en rampe du véhicule sont toujours actifs.

Une fois que le frein de parcage est actionné, étape 7, ce dernier prend la main sur les moyens automatiques de maintien en rampe du véhicule qui deviennent alors inactifs permettant ainsi au conducteur de doser son frein de parcage.

Cette fonction de sécurité, étape 6, peut également être remplacée par une fonction d'actionnement automatique du frein de parcage par l'unité de contrôle 6 au moyen d'un actionneur supplémentaire qui agit sur la commande du frein de parcage uniquement dans le sens du verrouillage.

Cet actionneur peut être constitué par exemple par un moteur électrique ou par un vérin.

Une fois que le frein de parcage est actionné, étape 7, ce dernier prend la main sur les moyens automatiques de maintien en rampe du véhicule qui deviennent alors inactifs.

Le déverrouillage ne peut être effectué que manuellement par le conducteur, à la reprise du véhicule.

On conçoit alors que ce système de freinage présente un certain nombre d'avantages par rapport aux systèmes de l'état de la technique en offrant un agrément de conduite amélioré notamment lors d'un démarrage en côte ou d'une manoeuvre en pente du véhicule, etc.., notamment grâce à la stratégie de fenêtre de capture décrite précédemment, ainsi qu'éventuellement, en supprimant l'opération manuelle d'activation du frein de parcage.

Il va de soi bien entendu que les moyens de maintien automatique peuvent également être associés aux deux branches du circuit de freinage dans le cas où celui-ci est un circuit de freinage en X.

On notera également que d'autres circuits de freinage tels que par exemple des circuits de freinage en I peuvent être envisagés.

## Revendications

1. Système de freinage de véhicule automobile, du type comportant au moins un circuit de freinage hydraulique (1) dont la pression de freinage est commandée par l'utilisateur par l'intermédiaire d'une pédale de frein (2), des moyens (4,5,6) de maintien automatique du véhicule en rampe, par maintien de la pression de freinage dans le circuit de freinage, activés lors de la détection d'une vitesse nulle du véhicule et d'une action de l'utilisateur sur la pédale de frein, et associés à des moyens (6) de détection d'une nouvelle action par l'utilisateur sur la pédale de frein lorsque les moyens de maintien sont actifs et à des moyens (6) de pilotage de ceux-ci pour établir la pression de freinage dans le circuit de freinage à la valeur correspondante à cette nouvelle action de l'utilisateur sur la pédale, les moyens de maintien comprenant une électrovanne (5) implantée dans le circuit de freinage du véhicule et pilotée à la fermeture et à l'ouverture pour maintenir ou non la pression de freinage dans ce circuit, sous la commande d'une unité de traitement d'informations (6) raccordée à des moyens de détection de la vitesse de déplacement du véhicule et à des moyens de détection d'une action sur la pédale de frein par l'utilisateur, caractérisé en ce que lors de la détection d'une nouvelle action sur la pédale de frein par l'utilisateur, les moyens de maintien étant actifs, l'unité de traitement d'informations (6) est adaptée pour piloter l'électrovanne à l'ouverture pendant un temps déterminé, puis pour piloter celle-ci à la fermeture afin d'établir la pression de freinage correspondant à la nouvelle action, dans le circuit de freinage.

2. Système selon la revendication 1, caractérisé en ce que le circuit de freinage est un circuit de freinage en X et en ce que les moyens de maintien sont implantés sur au moins l'une des branches du X.

3. Système selon la revendication 1, caractérisé en ce que le circuit de freinage est un circuit de freinage en I.

4. Système selon l'une quelconque des revendications précédentes, caractérisé en ce que l'unité de traitement d'informations (6) est reliée en outre à:
- des moyens de détection d'une action par l'utilisateur sur la pédale de frein du véhicule,
- des moyens de détection de la vitesse du véhicule,
- des moyens de détection du taux d'accélération du véhicule,
- des moyens de détection du taux d'embrayage du véhicule,
- des moyens de détection de l'inclinaison de la route sur laquelle circule le véhicule,
- des moyens de détection de la position de la boîte de vitesses du véhicule, et
- des moyens de détection de l'activation de feux de recul du véhicule.

5. Système selon l'une quelconque des revendications précédentes, caractérisé en ce que l'unité de traitement d'informations comporte un calculateur (6).

6. Système selon la revendication 5, caractérisé en ce que le calculateur est un calculateur d'anti-blocage de roues du véhicule.

7. Système selon l'une quelconque des revendications précédentes, caractérisé en ce que le temps déterminé est à peu près égal à 500 millisecondes.

## Patentansprüche

1. Bremssystem für ein Kraftfahrzeug mit wenigstens einem hydraulischen Bremskreis (1) dessen Bremsdruck durch den Benutzer über ein Bremspedal (2) gesteuert wird, Mitteln (4, 5, 6) zum automatischen Halten des Fahrzeugs auf einer schiefen Ebene durch Halten des Bremsdrucks in dem Bremskreis, die bei einer Erfassung einer Geschwindigkeit Null des Fahrzeugs und einer Einwirkung des Benutzers auf das Bremspedal aktiviert werden, und die mit Mitteln (6) zur Erfassung einer erneuten Einwirkung des Benutzers auf das Bremspedal während die Mittel zum Halten aktiv sind und mit Mitteln (6) zu deren Steuerung zur Erzeugung eines Bremsdrucks in dem Bremskreis in einer der erneuten Einwirkung des Benutzers auf das Pedal entsprechenden Höhe verbunden sind, die Mittel zum Halten beinhaltend einen Schaltschütz (5), der an dem Bremskreis des Fahrzeugs angebracht und zum Schliessen oder Öffnen zum Halten oder nicht des Bremsdrucks in dem Kreis gesteuert ist, unter der Steuerung einer Einheit zur Verarbeitung von Informationen (6), die mit Mitteln zur Erfassung der Geschwindigkeit der Fortbewegung des Fahrzeugs und mit Mitteln zur Erfassung einer Einwirkung auf das Bremspedal durch den Benutzer verbunden ist, dadurch gekennzeichnet, dass bei der Erfassung eines erneuten Einwirkens auf das Bremspedal durch den Benutzer während die Mittel zum Halten aktiv sind, die Einheit zur Verarbeitung von Informationen (6) zur Steuerung des Schaltschütz zum Öffnen während einer bestimmten Zeit eingerichtet ist und ferner zu dessen Steuerung zum Schliessen zur Erzeugung eines Bremsdrucks entsprechend des erneuten Einwirkens in dem Bremskreis.

2. System nach Anspruch 1, dadurch gekennzeichnet, dass der Bremskreis ein X-förmiger Bremskreis ist und dadurch, dass die Mittel zum Halten an wenigstens einem der Zweige des X angebracht sind.

3. System nach Anspruch 1, dadurch gekennzeichnet, dass der Bremskreis ein I-förmiger Bremskreis ist.

4. System nach irgendeinem der vorhergehenden Ansprüche, dadurch gekennzeichnet, dass die Einheit zur Verarbeitung von Informationen (6) ausserdem verbunden ist mit:
- Mitteln zur Erfassung einer Einwirkung durch den Benutzer auf das Bremspedal des Fahrzeugs,
- Mitteln zur Erfassung der Geschwindigkeit des Fahrzeugs,
- Mitteln zur Erfassung der Beschleunigungsrate des Fahrzeugs,
- Mitteln zur Erfassung des Kupplungsgrades des Fahrzeugs,
- Mitteln zur Erfassung der Neigung der Strasse, auf der das Fahrzeug fährt,
- Mitteln zur Erfassung der Position der Kupplung des Fahrzeugs und
- Mitteln zur Erfassung der Aktivierung der Rückfahrleuchten des Fahrzeugs.

5. System nach irgendeinem der vorhergehenden Ansprüche, dadurch gekennzeichnet, dass die Einheit zur Verarbeitung von Informationen einen Rechner (6) beinhaltet.

6. System nach Anspruch 5, dadurch gekennzeichnet, dass der Rechner ein Rechner für das Anti-Blockieren der Räder des Fahrzeugs ist.

7. System nach irgendeinem der vorhergehenden Ansprüche, dadurch gekennzeichnet, dass die bestimmte Zeit ungefähr 500 Millisekunden beträgt.

## Claims

1. Motor vehicle braking system of the type comprising at least one hydraulic braking circuit (1), the brake pressure of which is controlled by the user via a brake pedal (2), means (4,5,6) for automatically holding the vehicle on an incline, by maintaining the braking pressure in the braking circuit, these means being activated upon detection of zero vehicle speed and user action on the brake pedal and being associated with means (6) of detecting further action by the user on the brake pedal when the maintaining means are active and with means (6) for controlling these in such a way as to establish the braking pressure in the braking circuit at the value corresponding to this further action by the user on the pedal, the maintaining means comprising an electrically operated valve (5) fitted in the vehicle braking circuit and made to close and to open either to maintain or not to maintain the braking pressure in this circuit, under the control of an information processing unit (6) connected to means for detecting the speed of travel of the vehicle and to means for detecting action by the user on the brake pedal, characterized in that upon detection of further action on the brake pedal by the user, while the maintaining means are active, the information processing unit (6) is designed to make the electrically operated valve open for a determined length of time and then cause it to close so as to establish in the braking circuit the braking pressure that corresponds to this further action.

2. System according to Claim 1, characterized in that the braking circuit is an X-split braking circuit and in that the maintaining means are fitted on at least one of the branches of the X.

3. System according to Claim 1, characterized in that the braking circuit is an I-split braking circuit.

4. System according to any one of the preceding claims, characterized in that the information processing unit (6) is also connected to:
- means for detecting action by the user on the vehicle brake pedal,
- means for detecting the speed of the vehicle,
- means for detecting the extent to which the vehicle is accelerating,
- means for detecting the extent to which the vehicle clutch is engaged,
- means for detecting the inclination of the road on which the vehicle is travelling,
- means for detecting the position of the vehicle gearbox, and
- means for detecting activation of the vehicle reversing lights.

5. System according to any one of the preceding claims, characterized in that the information processing unit comprises a computer (6).

6. System according to claim 5, characterized in that the computer is an ABS computer.

7. System according to any one of the preceding claims, characterized in that the predetermined time is more or less equal to 500 milliseconds.
